Europäisches Patentamt

European Patent Office

Office européen des brevets

(11) Veröffentlichungsnummer: **0 327 083**

**A2**

(12) **EUROPÄISCHE PATENTANMELDUNG**

(21) Anmeldenummer: 89101784.0

(51) Int. Cl.⁴ **G04G 7/00**

(22) Anmeldetag: 02.02.89

(30) Priorität: 05.02.88 DE 3803525

(43) Veröffentlichungstag der Anmeldung:
09.08.89 Patentblatt 89/32

(84) Benannte Vertragsstaaten:
CH DE FR GB IT LI SE

(71) Anmelder: Licentia Patent-Verwaltungs-GmbH
Theodor-Stern-Kai 1
D-6000 Frankfurt/Main 70(DE)

(72) Erfinder: **Dorn, Willi**
**Weilstrasse 29**
**D-6277 Bad Camberg(DE)**
Erfinder: **Speh, Rainer, Dr.-Ing.**
**Niederschelder Weg 8**
**D-6000 Frankfurt/Main 50(DE)**

(74) Vertreter: **Lertes, Kurt, Dr. et al**
**Licentia Patent-Verwaltungs-GmbH**
**Theodor-Stern-Kai 1**
**D-6000 Frankfurt/M 70(DE)**

(54) Vorrichtung zum Betrieb von absoluten Echtzeituhren in einem eine Zentraluhr und Teilnehmer enthaltenden Prozesssteuersystem.

(57) Gegenstand der Erfindung ist eine Vorrichtung zum Betreib von Echtzeituhren, die sich in Teilnehmern (2, 3) eines hierarchisch durch Bussysteme verbundenen Prozeßsteuersystems befinden.
Die Echtzeit wird von einer Zentraluhr vorgegeben und über die vorhandenen Bussysteme an die einzelnen Teilnehmer (2, 3) weitergeleitet und synchronisiert.

FIG.1

EP 0 327 083 A2

# Vorrichtung zum Betrieb von absoluten Echzeituhren in einem eine Zentraluhr und Teilnehmer enthaltenden Prozeßsteuersystem

Die Erfindung bezieht sich auf eine Vorrichtung zum Betrieb von Echtzeituhren, die aus einer Zentraluhr die über Datenbusse verbundenen Teilnehmer eines verteilten Prozeßsteuersystems synchronisiert.

In einem Prozeßsteuersystem mit einer Reihe von Teilnehmern, die jeweils Prozeßgrößen messen, überwachen, steuern oder regeln, ist es öfters notwendig, für bestimmte Ereignisse des Prozesses die Zeit des Auftretens zu kennen bzw. bestimmte Ereignisse zu festgelegten Zeiten auszulösen. Es muß daher in Funktionseinheiten des Prozeßsteuersystems (insbesondere den prozeßnahen Einheiten) möglich sein, die Ereignisse mit einer allgemein gültigen Echtzeit in Beziehung zu bringen. Diese Teilnehmer bzw. Funktionseinheiten benötigen deshalb einen direkten Zugriff auf eine Echtzeituhr, die zugleich das Datum angibt.

Der Erfindung liegt die Aufgabe zugrunde, eine absolute Echtzeit in jedem Teilnehmer, der sie benötigt, mit einer relativen Genauigkeit zur Zentraluhr und einer hohen Auflösung bereitzustellen. Unter absoluter Echtzeit ist hierbei die jeweils gültige Ortszeit zu verstehen.

Die Aufgabe wird erfindungsgemäß dadurch gelöst, daß eine Zentraluhr vorgesehen ist, an die ein Echtzeitaufbereiter angeschlossen ist, der die Echtzeitinformation in das Datenformat der Schnittstellen des oder der Teilnehmer umsetzt, und daß in dem oder den Teilnehmern jeweils Echtzeituhren vorgesehen sind, die vom Echtzeitaufbereiter aus eingestellt und synchronisiert werden.

Vorzugsweise wird die Zentraluhr mit der amtlichen Zeit eingestellt und synchronisiert. Die Zentraluhr kann insbosondere durch eine Funkuhr realisiert werden. Es ist zweckmäßig, die Echtzeit im dem oder den Teilneh mern unter Ausnutzung vorhandener Taktgeber und gegebenenfalls Zählbausteinen in Verbindung mit Software bereitzustellen. Auf diese Weise können alle Teilnehmer bzw. Funktionseinheiten, die die Echtzeit benötigen, eine Echtzeituhr führen. Beispielsweise werden alle zu einer Station einer Energieverteilungsanlage gehörenden Echtzeituhren vor der zentralen Echtzeituhr gestellt und synchronisiert. Die Wirkungsrichtung entspricht hierbei vorzugsweise der Hierarchie von Datenbussystemen zwischen den Teilnehmern. Die Echtzeit wird bereitgestellt, indem die Echtzeit in den Funktionsbausteinen geführt und über Bussysteme verteilt wird, wobei unter Verteilung die Echtzeitübertragung zu den Teilnehmern und die Synchronisation der Echzeituhren in den Teilnehmern zu verstehen ist. Die Zentraluhr ist vorzugsweise mit dem Echtzeitaufbereiter zu einer Echtzeitzentrale kombiniert, die insbesondere in einer Baueinheit realisiert ist.

Die Zentraluhr liefert die Echtzeit als Daten und vorzugsweise einen Sekundentakt zur Synchronisation an einen zentralen Echtzeitaufbereiter. Dieser setzt die Echtzeit in ein für die gesamte Echtzeitbereitstellung gültiges Format um. Von hier aus wird die Echtzeit über die vorhandenen Datenschnittstellen zu den einzelnen Echtzeituhren übertragen. Die Synchronisation der Echtzeituhren erfolgt zweckmäßigerweise über dieselben Hardware-Schnittstellen, z. B. Datenschnittstellen, Bussysteme und dgl., über die die anderen Informationen zwischen der Zentrale und den Funktionsbausteinen übertragen werden. Es ist aber auch möglich, die Synchronisation über einen separaten Sekundentakt mit zusätzlicher Hardware zu erzeugen. Dieser Sekundentakt wird dann zentral generiert. Leifert nicht schon die Zentraluhr einen für das System geeigneten Sekundentakt, d. h. einen Sekundentakt mit der erforderlichen Zeitgenauigkeit, dem richtigen Pegel, der Valenz und dem fan out usw., dann wird dieser im zentralen Echtzeitaufbereiter generiert. Beide Synchronisationsverfahren können auch nebeneinander, d. h. gemischt, eingesetzt werden.

Bei der Realisierung der einzelnen Software-Funktionen werden die Interrupte berücksichtigt.

Wird z. B. DMA-Steuerung benutzt, dan muß ihre Wirkung quasi gleichzeitiger Zugriff parallel um Prozessor; unter Umständen Sperrung aller Prozessor-Aktivitäten (z. B. Interrupt-Reaktion über längere Zeiträume) berücksichtigt bzw. beschränkt werden.

Überlappende Zugriffsmöglichkeiten müssen bei Dual Port RAMs beachtet werden.

Das Format (Auflösung, Vorzeichen) der Variablen und Konstanten muß beachtet werden.

Mit der Erfindung soll auch eine Echtzeituhr zur Verfügung gestellt werden, die möglichst mit üblichen und in Funktionsbausteinen für Prozeßsteuerungen verwendeten Hardwarekomponenten auskommt.

Jede Echtzeithr besteht insbesondere aus der Kombination eines Hardware-Timers und einer Software-Uhr. Beide zusammen bilden eine Echtzeituhr, die bei Ausfall der Synchronisierung frei weiterläuft.

In Abhängigkeit von den Hardwaregegebenheiten der Funktionsbausteine und den Softwareanforderungen können zwei verschiedene Arten von Echtzeituhren realisiert werden:

- Eine Echtzeituhr mit einem asynchronem Hardware-Timer. Dieser Uhr kann in jedem Fall mit der vorhandenen Hardware realisiert werden und wird bevorzugt eingesetzt werden. - Eine Echtzeituhr mit synchronem Hardware-Timer. Diese Uhr kann einen Zeitscheiben-Interrupt generieren. Sie sollte nur dann realisiert werden, wenn das Softwaresystem unbedingt einen Zeitscheiben-Interrupt erfordert, da hier höhere Anforderungen an die Hardware (Timer) gestellt werden müssen. Diese höheren Anforderungen sind z. B. durch Erweiterung aller Änderungen der vorgesehen Hardware erfüllbar.

Die Echtzeituhr mit einem asynchronen Hardware-Timer ist auf allen Baueinheiten realisierbar, da sie keine besonderen Anforderungen an den Hardware-Timer stellt. Wenn die durch den jeweiligen Prozeß gegebenen Bedingungen es zulassen, alle Echtzeituhren mit asynchronem Hardware-Timer zu betreiben, dan reicht ein einziges Grundkonzept für sämtliche Echtzeituhren aus.

Der Hardware-Timer ist insbesondere ein binärer Zählerbaustein, auf den der Prozessor, der die Software-Uhr fährt, lesend zugreifen kann. Er wird dauernd mit einem quarzstabilen Takt fast beliebiger Frequenz größer gleich 10 MHz versorgt und zählt ohne Unterbrechung zyklisch die Taktimpulse. Die Bezeichnung "asynchron" bedeutet hier, daß die Zähler-Eingangsfrequenz und der Zählerzyklus in keinem "synchronen" Verhältnis zu irgendwelchen Zeiteinheiten der Software-Uhr stehen müssen. Diese Zählerbetriebsart ist die einfachste überhaupt und wird von allen Hardware-Timern beherrscht.

Der Hardware-Timer enthält einen
- einfachen Dualteiler (Binärteiler), der in
- Zyklischer Dauerbetrieb arbeitet und mit
- Eingangsfrequenz >= 10 MHz beaufschlagt wird, die eine hohe
- Frequenzstabilität, z. B. mit Hilfe eines Quarzes, aufweist.

Die Mindest-Teilerlänge ist abhängig von der Software, da der Prozessor, der die Software-Uhr aus dem Hardware-Timer ableitet, alle Timer-Überläufe erkennen muß.

Die Timerstellung muß durch den Prozessor lesbar sein.

Es ist günstig, wenn der Timer-Überlauf-Interrupt den Prozessor beaufschlagt. Durch die Software wird vorzugsweise gewährleistet, daß jeder Timer-Überlauf sicher erkannt wird, so daß kein Timer-Interrupt notwendig ist. Die Nutzung eines Timer-Überlauf-Interrupts erhöht die Sicherheit und/oder die Zuverlässigkeit der Zeitmessung.

Die Zählrichtung kann beliebig sein. Bei einem Abwärtszähler muß der Zählerstand vor der Weiterverarbeitung negiert bzw. invertiert werden.

Die Software-Uhr in den einzelnen Funktionsbausteinen jeweils von dem Prozessor bearbeitet, der die Uhrzeit benötigt, sei es, um Ereigniszeiten zu ermitteln, Echtzeitreaktionen zu veranlassen, oder auch nur, um die Uhrzeitsynchronisation an nachgeordnete Uhren weiterzuleiten. Der Prozessor hat unmittelbaren Zugriff auf einem hierfür bereitgestellten Hardware-Timer.

Die Uhrzeit wird jeweils bei Bedarf und in Pausenzeiten (wenn sonst keine Prozessorleistung verlangt wird) ermittelt und vorzugsweise in einen RAM bereitgehalten (Uhrzeitführung). Die Synchronisation der Uhrzeit erfolgt zweckmäßigerweise interruptgesteuert (Bilder 24..., 16...)

Die Uhrzeitführung ist verantwortlich für den "Gang" der Echtzeituhr und stellt sicher, daß die aktuelle Echtzeit immer dann mit der geforderten Genauigkeit verfügbar ist, wenn sie benötigt wird.

Dies wird bei gegebener Hardware mit einem Minimum an Programmlaufzeit erreicht, indem folgenden Verfahren zum Einsatz kommt:

Der Prozessor, der die Software-Uhr führt, kann den Hardware-Timer direkt lesen.

Zur Uhrzeitführung wird zunächst der Hardware-Timer eingelesen.

Dann wird ermittelt, wieviel Zeit seit der letzten Aktualisierung der Software-Uhr vergangen ist. Hierzu wird der Stand des Hardware-Timers, der zur letzten aktuellen Software-Uhrzeit gezielt bereitgehalten.

Ein Bereich gibt die Anzahl der Millisekunden an, die der Uhrzeit aktuell hinzugerechnet werden müssen.

Wird eine fortgesetzte Substraktion (Multiplikation) verwendet, dann ist die Programmlaufzeit zur Berechnung der neuen Uhrzeit umso größer, je mehr Zeit seit der letzten Zeitrechnung vergangen ist. Aus diesem Grund kann es vorteilhaft sein, die Uhrzeit nicht nur "bei Bedarf" neu zu berechnen, sondern zwischendurch immer dann, wenn das Programmsystem eine Pausenschleife durchläuft und ohnehin keine Programmlaufzeit beansprucht.

Dieses Verfahren kann auch dazu dienen, die Überläufe des Hardware-Timers zu erfassen und entsprechend zu berücksichtigen. Diese Art der Timer-Überlauferkennung funktioniert dann, wenn sichergestellt wird, daß zwischen je zwei benachbarten Neuberechnungen der Uhrzeit weniger als eine Timer-Zykluszeit liegt.

Ein sicheres Verfahren zur Erkennung der Timer-Überläufe liefert der Timer-Überlauf-Interrupt. In der Interrupt-Routine kann entweder ganz normal die Uhrzeit berechnet werden, oder einfach ein Überlaufzähler nachgezählt werden. Dieser Zähler wird dann bei einer später erfolgenden Uhrzeitberechnung berücksichtigt.

Der Rest der Uhrzeitführung wird durch das gewünschte Format der Uhrzeit wesentlich mitbestimmt und besteht im allgemeinen aus einem mehrstufigen Zähler-Aufbau mit Sonderfunktionen.

Es ist auch möglich, eine Echtzeituhr mit synchronen Hardware-Timer aufzubauen.

Bei zu steuernden Prozessen, in Anwendung in der Energieverteilung, ist es erforderlich, daß in den jeweils mit einer Echtzeituhr ausgestatteten Funktionsbausteinen eine bestimmte Uhrzeitdifferenz nicht überschritten wird, die z. B. im Bereich von 10 msec liegt.

Der Erfüllung dieser Forderung wird bei der Verteilung der Echtzeit von der Zentraluhr bis zur Echtzeituhr im "letzten" Funktionsbaustein berücksichtigt.

Die Verteilung der Echtzeit wird vorzugsweise in die beiden Verfahrensschritte "Echtzeitübertragung" und "Synchronisation der Echtzeituhren" zerlegt.

## Übertragung der Echtzeit

Die Übertragung der Echtzeit erfolgt über die vorhandenen Daten-Schnittstellen, z. B. über Bussysteme von Uhr zu Uhr.

Das Datenformat bei der Übertragung der Echtzeit ist an allen Schnittstellen gleich und stellt eine Erweiterung der Echtzeitdarstellung im Prozeß dar. Es ist zugleich eine Teilmenge der Darstellung einer kompletten Software-Uhr. Das Format ist unabhängig von der Art der Synchronisation der Echtzeituhren.

Eine Ausnahme bei der Echtzeitübertragung gibt es beim Datenformat der Zentraluhr. Dieses Format wird von der verwendeten Zentraluhr vorgegeben und im zentralen Echtzeitaufbereiter in das Standardformat umgesetzt, das bei allen Schnittstellen gleich ist.

Die Übertragung zwischen Software-Uhr und Übertragungs-Schnittstelle erfolgt blockweise, d. h. die gesamte Uhrzeit wird an einem Stück übertragen, und wird gegen gleichzeitige Uhrverstellung verriegelt.

## Synchronisation der Echtzeituhren

Von zentraler Bedeutung für die gesamte Echtzeitbereitstellung ist die Art der Synchronisation der Echtzeituhren. Hier kommen vorzugsweise zwei Verfahren in Betracht, die oben bereits erwähnt wurden:
- Synchronisation über die vorhandenen Schnittstellen (Bussysteme),
- Synchronisation über einen eigenen Takt (separate Taktleitung).

Das erste Verfahren erfordert mehr Softwareaufwand, während das zweite Verfahren mehr hardware benötigt. Beide Verfahren können auch "gemischt" in einer Anlage vorkommen.

Das erste Verfahren is wirtschaftlicher.

Beide Verfahren sind so aufgebaut, daß sie Ausfälle von "Synchronimpulsen" tolerieren.

## Synchronisation über die Datenschnittstellen

Bei diesem Verfahren wird die Synchronisation über eine Schnittstellenaktion zwischen Teilnehmern einer Schnittstelle erreicht. Schnittstellen sind hier die Verbindungen, über die auch die Grobuhrzeit übertragen wird. Es wird dabei keine Zusatzhardware benötigt.

Für jede Schnittstelle wird eine "Synchronisationsprozedur" definiert. Es ist möglich, für alle Bus-Schnittstellen (parallel und seriell) ein prinzipielles Konzept zur Uhrzeitsynchronisation anzugeben:

Wichtiges Prinzip bei der Synchronisation über die Datenschnittstellen ist die Reduzierung von undefinierten Verzögerungszeiten auf das erreichbare Minimum. Dabei muß bedacht werden, daß bei einer Synchronisation über mehrere Stufen die Fehler sich addieren. Definierte Verzögerungszeiten sind keine Fehlerquelle, da sie berücksichtigt werden können.

Das Ziel mit möglichst geringen undefinierten Verzögerungszeiten (bei der Uhrzeitsynchronisation über die Datenschnittstellen) zu arbeiten, wird wie folgt erreicht:

Alle verwendeten Schnittstellen bieten die Möglichkeit, durch bestimmte Schnittstellenereigniss (z. B. "Übertragung beendet") einen Interrupt zur Verarbeitungseinheit des die Uhrzeit führt, auszulösen. Dies gilt auch für die Bus-Controller.

Es werden Schnittstellenprozeduren angewendet, die bei verschiedenen Busteilnehmern (Master, Slave) einen Interrupt auslösen. Es hat sich gezeigt, daß der zeitliche Abstand dieser Interrupte zu einem bestimmten Ereignis an der Schnittstellen-Hardware zumeist auf einige Mikrosekunden genau bestimmbar ist. Dadurch wird der zeitliche Abstand von Interrupts, die durch eine Schnittstellenprozedur bei unterschiedlichen Schnittstellenteilnehmern ausgelöst werden, (z. B. Masters and Slaves), ebenfalls auf Mikrosekunden genau bestimmt.

Die Hardware-Voraussetzungen für eine ausreichend genaue Synchronisierung durch Interrupt sin durch die oben erwähnte Feststellung gegeben. Die Software wird so ausgebildet, daß der anstehende relevante Interrupt wenigstens einmal innerhalb eines bestimmten Zeitintervalls spätestens nach einer tolerierbaren Sperrzeit freigegeben wird. Das Verfahren beinhaltet folgende Schritte:

1. Es wird eine spezielle Bus-Prozedur (Übertragung vom Master zum Slave) mit einer (zu vereinbarenden) Kennung SYNC gestartet. Diese Prozedur kann auch ein "Aufruf an alle" sein (soweit vorhanden).

2. Die SYNC-Busprozedur löst bei allen beteiligten Busteilnehmern, auch beim Master, einen Interrupt aus.

3. Die Interrupt-Routinen frieren die augenblickliche Feinzeit ein.

4. Ist ein SYNC-Interrupt gesperrt wenn das SYNC-Ereignis eintritt, dann wird die Uhrzeit erst nach der Interrupt-Freigabe eingefroren und ist möglicherweise nicht mehr aktuell (spätere Zeit). Damit dies erkennbar ist, wird auch immer dann, wenn der Interrupt gesperrt wird, die aktuelle Uhrzeit eingefroren. Ist der Interrupt nicht gesperrt wenn er ausgelöst wird, dann wird dies erkannt und beide Zeiten werden gleichgesetzt, womit sie als eindeutig gültig erklärt sind.

5. In einer später folgenden Busprozedur sendet der Master der bzw. den Slaves seine eingefrorene Feinzeiten zusammen mit der Grobzeit. Damit ist zugleich die Funktion "Übertragung der Echtzeit" erfüllt.

6. Die Slaves berechnen jeweils aus der übertragenen Uhrzeit und ihrer eigenen (eingefrorenen) Zeit die Differenz (= Regelabweichung für die eigene Uhr) und regeln ihre Uhren ein oder stellen sie neu, wenn die Regelabweichung mehrmals hintereinander unzulässig groß (asynchron) war.

Diese Prozedur muß nicht sofort durchgeführt werden und kann Abhängigkeit von der Programmlaufzeit optimal aufgerufen werden.

Erfolgt die Synchronisation der Echtzeituhren über einen separaten Takt, dann wird dieser Takt den Prozessoren, die ihre Echtzeituhr damit synchronisieren sollen, als Interrupt-Auslösesignal zugeführt. Die Taktfrequenz beträgt vorzugsweise genau ein Herz (Sekundentakt). Der Beginn jeder neuen Sekunde wird durch die aktive Taktflanke angezeigt (0-1-Übergang).

Es ist von Vorteil, wenn bei beiden in Frage kommenden Synchronisationsverfahren möglichst mit denselben Softwareroutinen gearbeitet werden kann, deshalb wird eine Prozedur angewendet, die weitgehende Übereinstimmung mit dem oben angegebenen Synchronisationsverfahren aufweist.

Der wesentliche Unterschied besteht darin, daß anstelle einer ereignisgesteuerten Routine eine zeitabhängig gesteuerte Routine (Interrupt-Sekundentaktroutine) durch den Sekundentakt aufgerufen wird. In dieser Routine wird für die Feinzeit (die über den Bus empfangen wird) ein sekundentaktgerechter Ersatz generiert.

In der Initialisierungsphase werden zunächst alle Variablen mit definierten Werten vorbesetzt. Das System der Echtzeitverteilung sorgt dann dafür, daß nach einer Hochlaufzeit alle Uhren synchronisiert sind und mit der geforderten Genauigkeit "gehen". Alle Zustände werden über Flags angezeigt.

Die Erfindung im folgenden an Hand von in einer Zeichnung dargestellten Ausführungsbeispielen näher beschrieben, aus denen sich weitere Einzelheiten, Merkmale und Vorteilen ergeben.

Es zeigen:

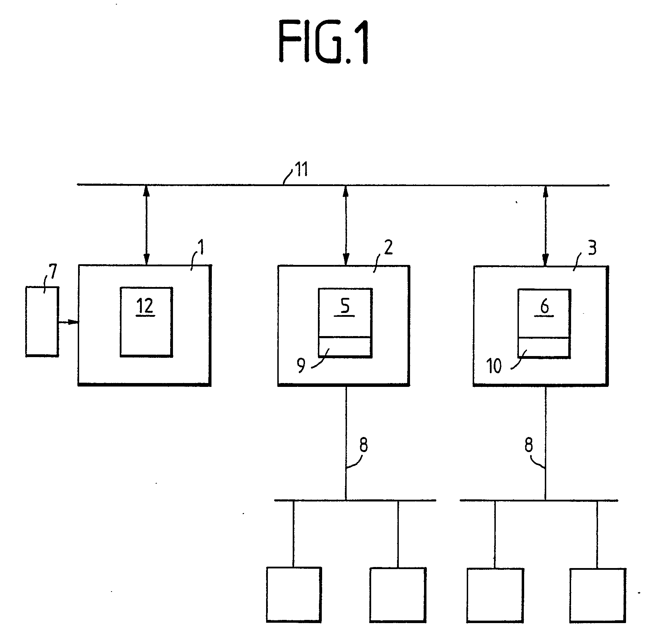

Fig. 1 ein Schaltbild einer Anordnung mit einer Zentralen, die eine zentralen Echtzeituhr enthält, und mit der Zentralen verbun dene Teilnehmer, die jeweils Echtzeituhren enthalten,

Fig. 2 ein Ablaufdiagramm für ein Hauptprogramm in einem Teilnehmer, der eine Software-Echtzeituhr und einen Hardware-Tuner enthält,

Fig. 3 eine Ablaufdiagramm der Aktualisierung der Uhrzeit in einem Teilnehmer,

Fig. 4 ein Ablaufdiagramm der Feststellung des Zählstands des Hardware-Timers in einem Teilnehmer,

Fig. 5 ein Ablaufdiagramm der Eingabe eines neuen Zählstands in den Hardware-Timer,

Fig. 6 ein Ablaufdiagramm des Takts der Software-Echtzeituhr,

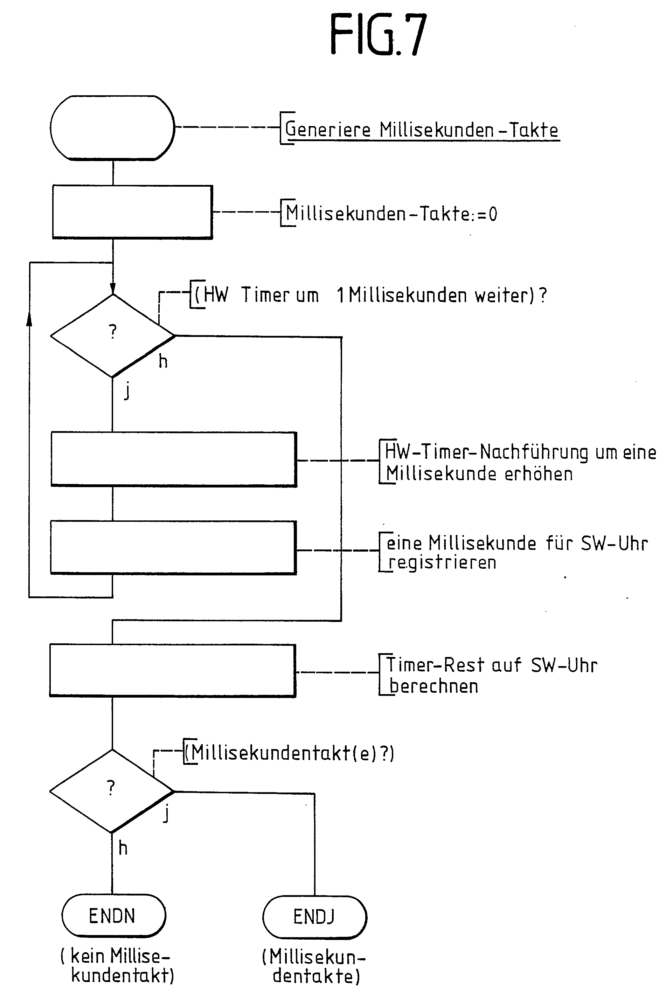

Fig. 7 ein Ablaufdiagramm für die Generierung von Millisekundentakten,

Fig. 8 ein Ablaufdiagramm für die Bearbeitung des Millisekundentakts,

Fig. 9 ein Ablaufdiagramm eines einen externen Sekundentakt zugeordneten Interrupts,

Fig. 10 ein Ablaufdiagramm eines einen Empfangstakt zugeordneten Interrupts,

Fig. 11 ein Ablaufdiagramm eines einem Uhrzeitsynchrontakt zugeordneten Interrupts,

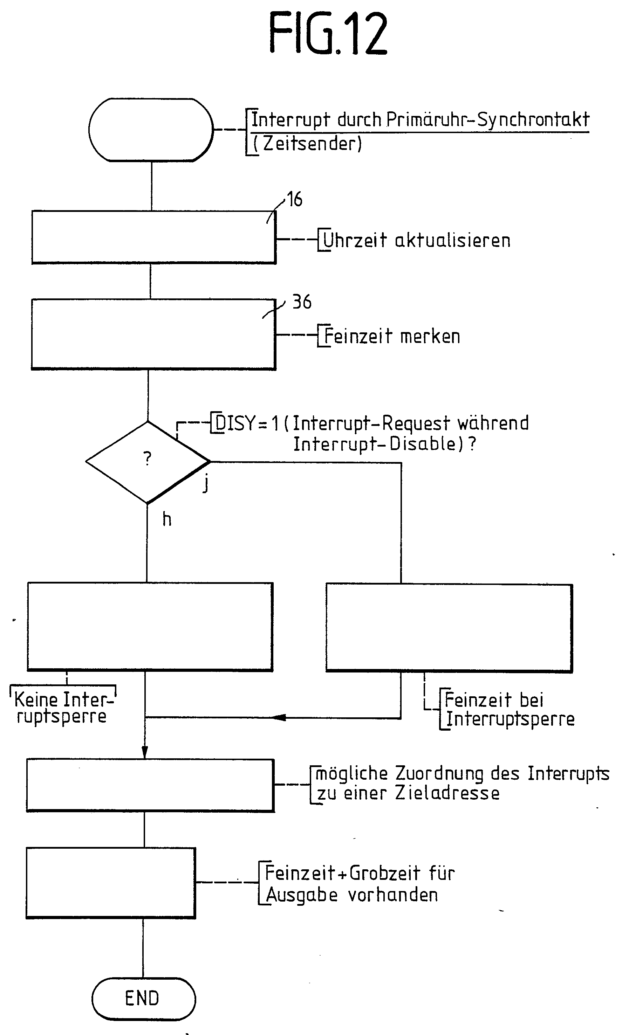

Fig. 12 ein Ablaufdiagramm eines einem Primäruhr-Synchrontakt zugeordneten Interrupts.

In einer Station 4 bzw. Prozeßleitsystem ist als Zentralteil eine Stationseinheit 1 vorgesehen. Diese enthält als Steuereinheit ein Mehrrechner-System, z. B. mit parallelem Bus.

Teilnehmer 2, 3 am Systembus 11 sind Baugruppen, die je eine multimasterfähige Rechnerkarte darstellen. Jede Rechnerkarte führt eine Echtzeituhr 5, 6.

Eine Rechnerkarte der Stationseinheit 1 enthält zusätzlich die Software eines zentralen Echtzeitverteilers 12. Diese Baugruppe wird von einer Zentraluhr 7 der Station 4 aus mit der Echtzeit versorgt. Von hier aus wird die Echtzeit zu den Uhren der einzelnen Rechnerkarten über den Systembus 11 "verteilt".

Die Weiterverteilung der Echtzeit geschieht von der Stationseinheit 1 aus über die seriellen Bus-Systeme, von denen ein Bus 8 dargestellt ist. Dabei wird ein Anlagenbus normalerweise durch eine serielle Schnittstelle einer Baugruppe realisiert. Falls die notwendigen Schnittstellen auf der Baugruppe nicht zur Verfügung stehen und durch Zusatzmodule realisiert werden, die normalerweise ebenfalls einen eigenen Mikroprozessor beinhalten, müssen auf diesen ebenfalls eigene Echtzeituhren geführt werden.

Als Hardware-Timer 9, 10 wird jeweils der Timer eines Prozessors verwendet. Die Timer können sowohl prozessorintern als auch extern Timerereignisse (z. B. Timer-Überlauf) als Interrupt zum Prozessor melden.

Die Verteilung von Echtzeit über den Systembus 11 erfolgt vom zentralen Echtzeitverteiler 12 aus. Dieser is auf einer Rechnerkarte realisiert. Von hier aus wird die Uhrzeit über den Systembus 11 zu allen anderen Teilnehmern 2, 3 übertragen und synchronisiert.

Alle beteiligten Busteilnehmer 2, 3 führen ihre eigene Echtzeituhr.

Zur Durchführung der Übertragung und Synchronisation der Echtzeit über den Systembus 11 bewirbt sich der zentrale Echtzeitverteiler 12 um die Bushoheit. Er sendet zunächst eine Meldung zur Uhrzeitsynchronisation an die Busteilnehmer 2, 3, deren Echtzeituhr zu synchronisieren ist. Diese Meldung kann alle Busteilnehmer gleichzeitig synchronisieren. In folgenden Meldungen wird dann die "eingefrorene" Uhrzeit des Echtzeitverteilers 12 zu den anderen Bus-Teilnehmern übertragen.

Der zentrale Echtzeitverteiler 12 ist auf einer baugruppe realisiert. Von hier aus werden alle anderen Uhren in der Stationseinheit 1 über den Systembus 11 gestellt und synchronisiert.

Der zentrale Echtzeitverteiler führt hierzu eine Echtzeituhr wie alle anderen Bus-Teilnehmer.

Im Unterschied zu den anderen Uhren wird diese aber nicht von einem übergeordneten Echtzeitverteiler und synchronisiert. Das genaue Verfahren der Uhrzeiteinstellung und -synchronisation ist abhängig von der verwendeten Zentraluhr.

## Zentraluhren

In jeder Stationseinheit 1 gibt es einen zentralen Echtzeitverteiler 12, der eine eigene Echtzeituhr führt und die Echtzeit über den Systembus 11 an die anderen Echtzeituhren der Stationseinheit verteilt.

Der zentrale Echtzeitverteiler selbst erhält Uhrzeit und "Synchronisierimpulse" von der Zentraluhr 7.

Die Zentaluhr 7 ist normalerweise Teil der Stationseinheit 1 und kann verschieden aufgebaut sein.

Nachfolgend werden die verschiedenen Verfahren einzeln erläutert.

Vorzugsweise empfängt eine Funkuhr den Zeit- und Normalfrequenzsender DCF77 und stellt Uhrzeit und Datum über verschiedene Schnittstellen zur Verfügung. Werden die Schnittstellen durch die Funkuhr aktiviert, dann werden die Schnittstellen-Ereignisse uhrzeitsynchron ausgelöst. Die absolute Wiederholgenauigkeit beträgt hierbei 20 Millisekunden (abhängig von der Empfangsfeldstärke) bei einem Kurzzeitjitter von einer Millisekunde.

Die Funkuhr 7 sendet selbständig alle Sekunden Uhrzeit und Datum über ihre serielle Schnittstelle zum Echtzeitverteiler 12.

Für den zentralen Echtzeitverteiler 12 bedeutet dies, daß alle Sekunden durch den Sekundentakt einen Interrupt auslöst wird. Darauf folgt die komplette Übertragung der Uhrzeit.

Der jeweilige Systembus-Teilnehmer 2, 3 und eventuell vorhandene Zusatzmodulen sind über eine gemeinsame Schnittstelle miteinander gekoppelt. Alle Module enthalten je eine eigene Echtzeituhr. Dabei wird die Uhr auf dem Zusatzmodul von der (übergeordneten) Uhr über die Schnittstelle gestellt und synchronisiert. Auch hier wird grundsätzlich das unten noch näher erläuterte Übertragungsverfahren angewendet.

Lediglich die "Synchronisation über die Datenschnittstelle" wird abgeändert, da es kein Hardware-Schnittstellenereignis gibt, das auf beiden Seiten der Schnittstelle einen Interrupt auslöst. Hier löst lediglich ein Teilnehmer 2 bzw. 3 auf einer Seite de Schnittstelle einen Interrupt beim Teilnehmer auf der anderen Seite der Schnittstelle aus. Als Ersatz für den Interrupt der auftretenden Seite wird dort unmittelbar nach dem Auslösen (des Interrupts zur anderen Seite) eine Interrupt-Ersatz-Routine aufgerufen, also so getan, als wäre ein Interrupt der Schnittstellenprozedur ausgelöst worden. Die Richtung, in der dieser Vorgang über die Schnittstelle abläuft, ist prinzipiell beliebig, sollte jedoch möglichst der Systemhierarchie entsprechen.

Die Verteilung der Echtzeit über den Bitbus Anlagenbus 8 erfolgt vom Teilernehmer 2 oder 2 aus.

Alle beteiligten Busteilnehmer (Master und Slaves) führen ihre eigene Echtzeituhr.

Zur Durchführung der Uhrzeitübertragung und -synchronisation sendet der Master zunächst ein Telegramm, das bei bei den aktiven Bus-Teilnehmern einen Interrupt auslöst.

Später wird vom Master die "eingefrorene" Zeit zu dem Slave übertragen.

Die genaue Zeitverschiebung zwischen dem Interrupt des Masters und dem Interrupt des Slaves wird einmalig experimentell ermittelt.

Die Echtzeit wird der Feldeinheit über den Anlagenbus 8 zugeführt. Auch die Synchronisation der Uhrzeit in der Feldeinheit erfolgt über den Anlagenbus.

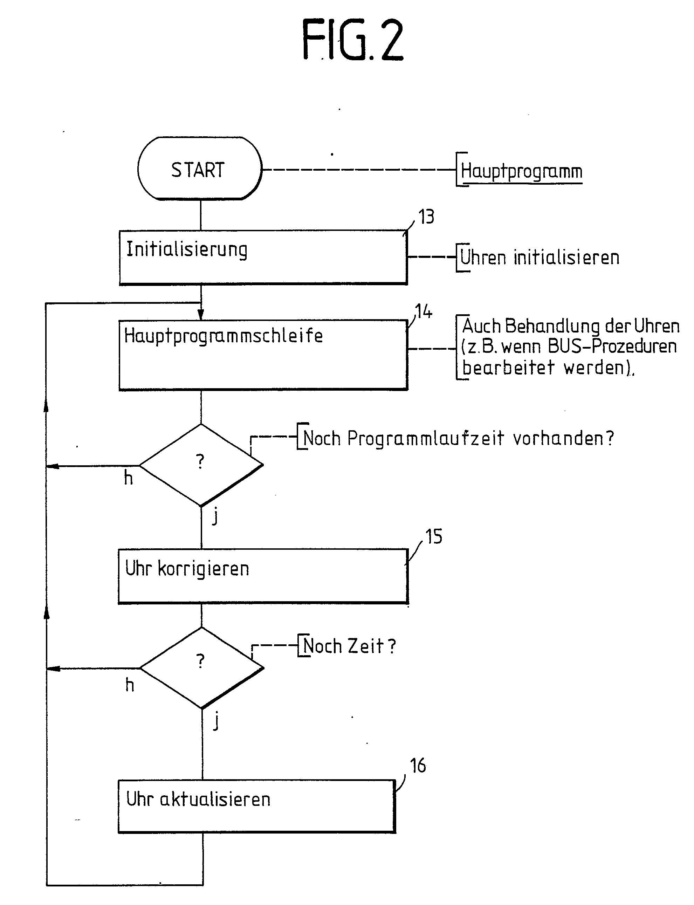

In den Teilnehmer 2, 3 läuft jeweils ein Hauptprogramm ab, das eine Software-Uhr enthält. In Fig. 2 ist ein Ablaufdiagramm in Verbindung mit der Software-Uhr dargestellt.

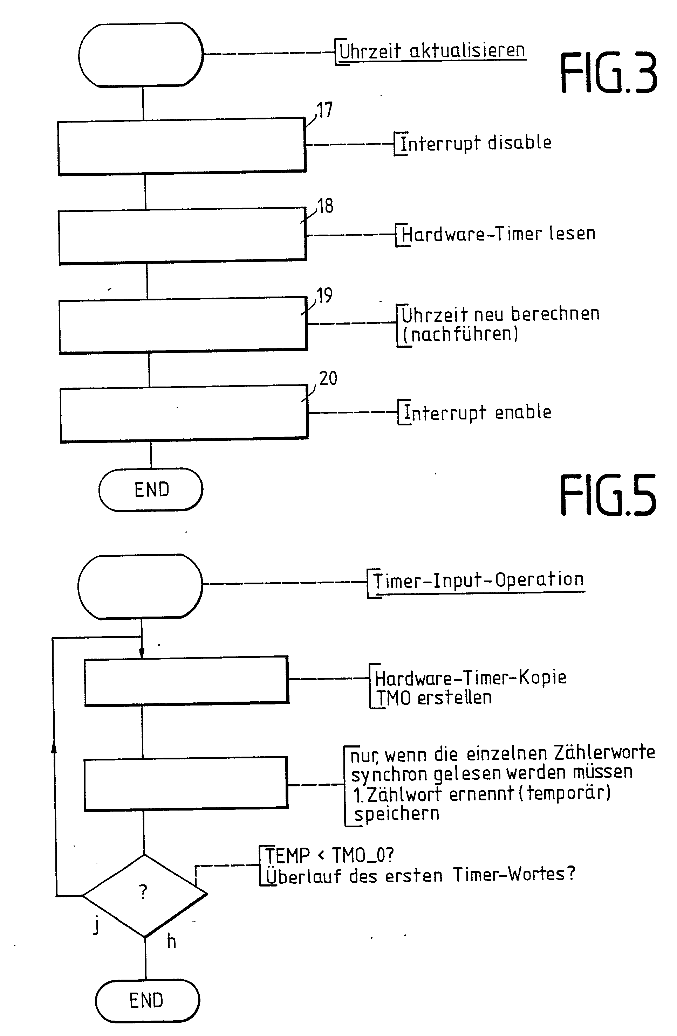

Nach dem Start werden die zu steuernden Uhren in einem Schritt 13 initialisiert. Danach wird in eine Hauptprogrammschleife 14 eingetreten, die folgende Programmteile enthält: Echtzeit von extern übernehmen, Ausgabe der Uhrzeit, SYNC-Interrupt Disable bzw. SYNC-INTERRUPT ENABLE, Disable bzw. enable speziellen Interrupt und disable bzw. enable generellen Interrupt. Wenn nach dem Durchlaufen der Hauptprogrammschleife noch Programmzeit vorhanden ist, wird in einem Programmteil 15 die Echtzeituhr korrigiert. Ansonsten wird die Hauptprogrammschleife wiederholt. Verbleibt nach der Korrektur der Uhr noch Zeit, wird die Echtzeituhr in einem Programmteil 16, das in Fig. 3 dargestellt ist.

Das Programmteil 16 enthält die Programmteile 17, 18, 19, 20 jeweils für Interrupt disable, Hardware-Timer lesen, Uhrzeit neu berechnen und Interrupt enable.

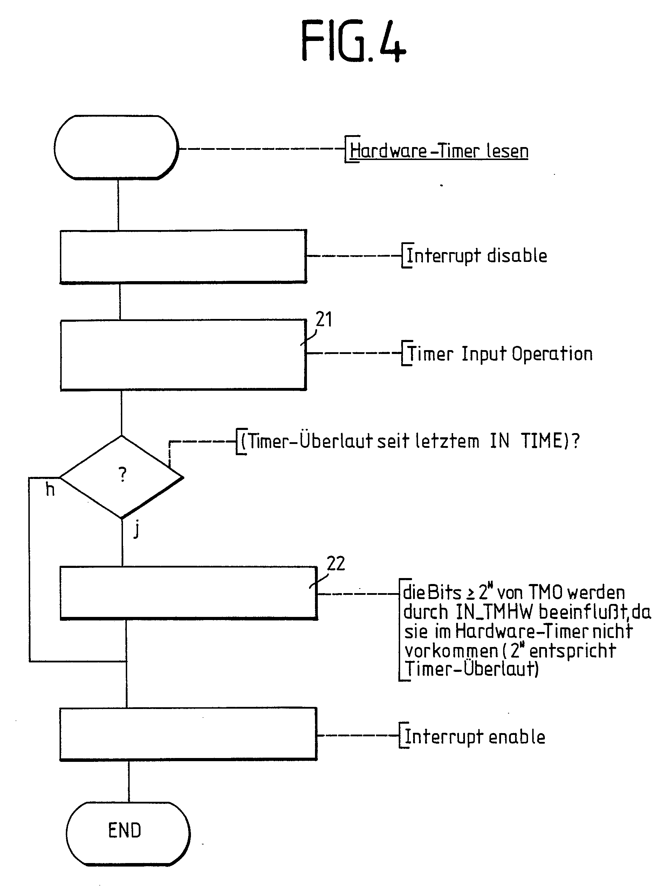

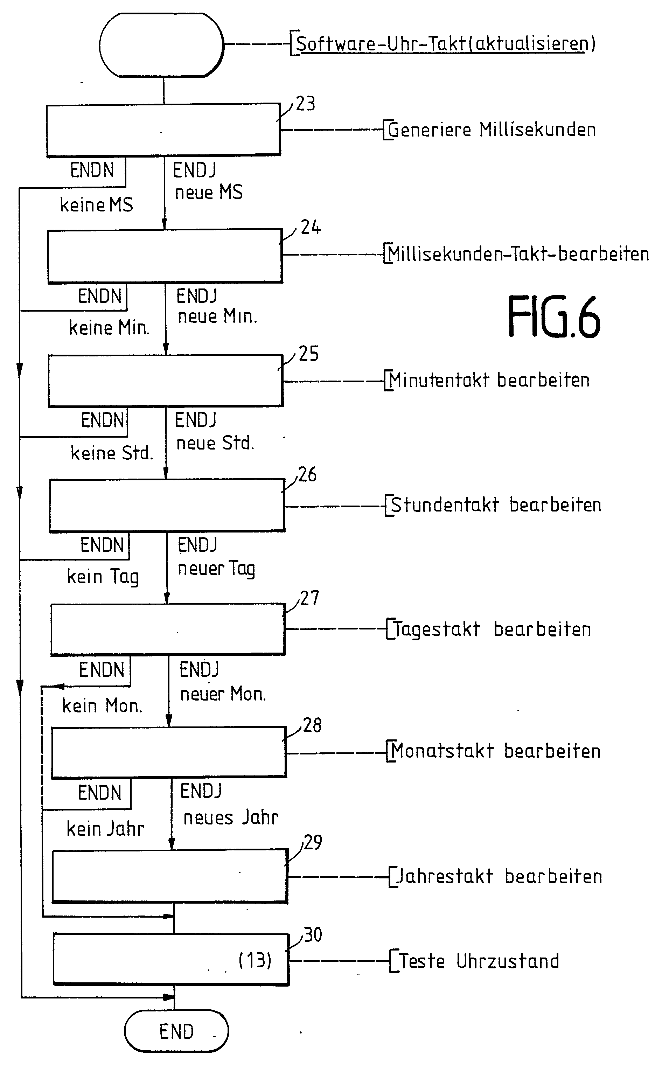

Die Uhrzeitführung durch Hardware-Timer lesen, geht aus Fig. 4 hervor. Dieses Unterprogramm enthält die Teile Interrupt disable, Timer Input 21, die Abfrage nach dem Überlauf des Timers nach dem letzten Einlesen, die Korrektur 22 des Zählerstands bei einem Überlauf und den Schnitt Interrupt enable. Der Aufbau der Unter-Programms 21 ist in Fig. 5 dargestellt. Das Unterprogramm beinhaltet die Erstellung einer Kopie des Hardware-Timers und, wenn die einzelnen Zählerworte synchron gelesen werden müssen, die temporäre Speicherung der Wörter. Es wird der Stand des Hardware-Timers, der der letzten aktuellen Software-Uhrzeit entspricht, bereitgehalten. Die Aktualisierung des Software-Uhr-Takts ist in Fig. 6 dargestellt. Diese Aktualisierung beinhaltet folgende Unterprogramme: Millisekundengenerierung 23, Millisekundentaktbearbeitung 24, Minutentaktbearbeitung 25, Studentaktbearbeitung 26, Tagestaktbearbeitung 27, Monatstaktbearbeitung 28, Jahrestaktbearbeitung 29 und Uhrzustandtest 30.

Das Unterprogramm setzt zunächst den Millisekundentakt auf null und prüft danach, ob der Hardware-Timer um 1 ms weitergezählt hat. Wenn dies der Fall ist, wird die Hardware- Timer-Nachführung um 1 ms erhöht und anschließend 1 ms für die Software-Uhr registriert, bevor die Prüfung wiederholt wird. Hat der Hardware-Timer nicht um 1 ms weitergezählt, dann wird der Timer-Rest mit dem Stand der Software-Uhr verrechnet.

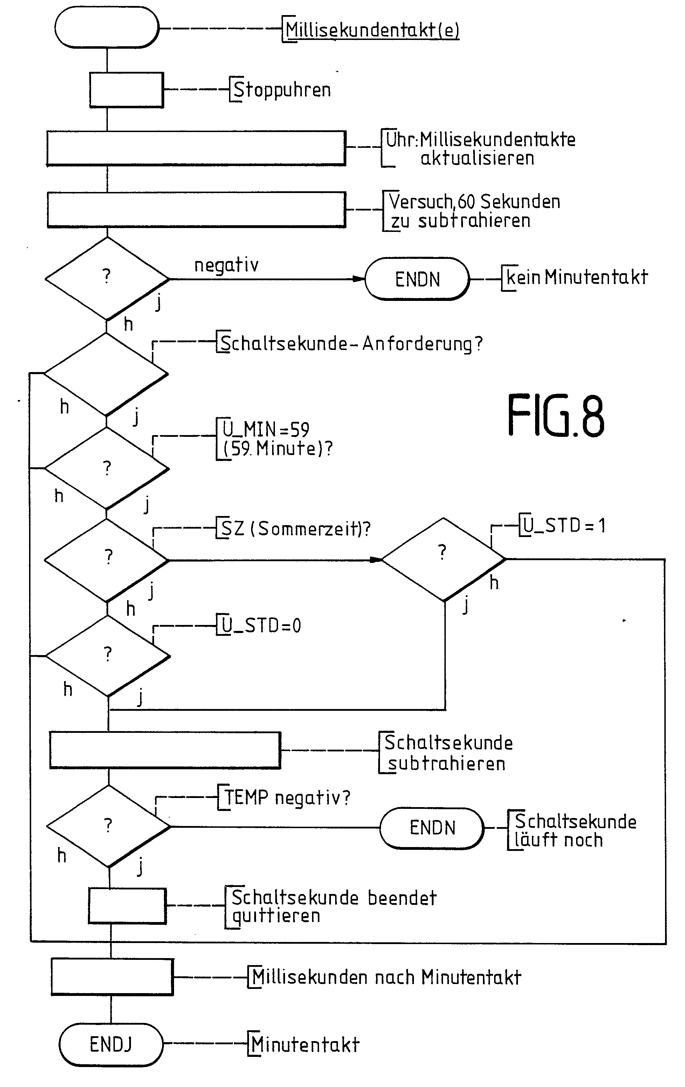

Die Verarbeitung der Millisekundentakte ist in Fig. 8 dargestellt. Nach dem in Fig. 8 dargestellten Verfahren werden Minutentakteaus Millisekundentakte erzeugt. Die Verarbietung der Minutentakte, Stundentakte, Tagestakte, Monatstakte und Jahrestakte erfolgt entsprechend und ist nicht näher dargestellt.

Im System wird durch die getrennte Übertragung der Echtzeit zu den Teilnehmern und der Synchronisationsinformation eine Verminderung der Belegung der Übertragungskanäle durch die Echtzeitverteilung erreicht. Die Echtzeit wird an allen Schnittstellen mit dem gleichen Datenformat übertragen. Das Datenformat ist daher unabhängig von der Art der Synchronisation der Echtzeituhren. Die Echtzeit wird blockweise über die jeweilige Schnittstelle und in einem Stück übertragen, wobei die gleichzeitige Uhrverstellung verriegelt wird. Die Echtzeitkorrektur im jeweiligen Teilnehmer beginnt mit einem Aufruf durch die Uhrzeit-Übergabe. Danach wird die berechnete Uhrzeit mit der Sollzeit verglichen. Die Uhrzeit ist unterteilt in eine Grobzeit und eine Feinzeit. Es wird geprüft, ob die berechnete Uhrzeit innerhalb zulässiger Toleranzen mit der übertragenen Uhrzeit übereinstimmt. Falls dies nicht zutrifft, wird die Zeit in der Echtzeituhr des jeweiligen Teilnehmers korrigiert.

Vorzugsweise werden die Echtzeituhren über die vorhandenen Schnittstellen synchronisiert. Für die Schnittstellen wird eine Synchronisationsprozedur definiert. Alle verwendeten Schnittstellen bieten die Möglichkeit, durch bestimmte Schnittstellenereigniss (insbesondere "Übertragung beendet") einen Interrupt zu dem Prozessor, der die Uhrzeit führt, auszulösen.

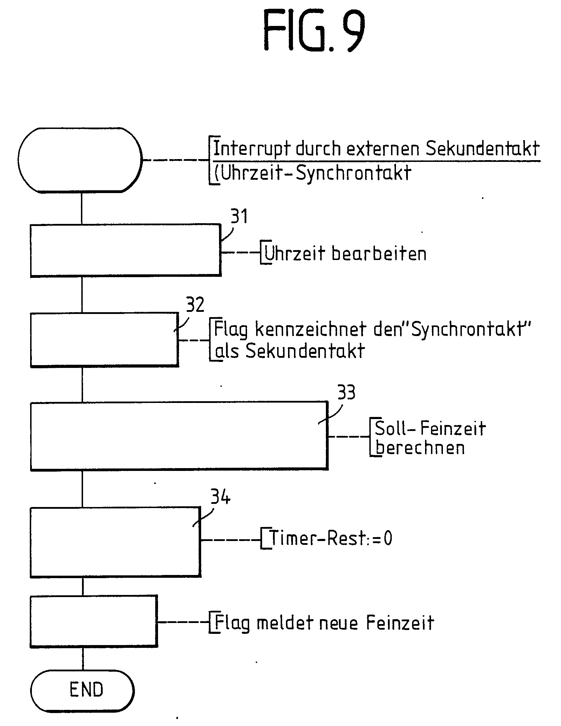

Für die Synchronisierung wird eine spezielle Bus-Prozedur (Übertragung vom Master zum Slave) mit einer vorgebbaren Kennung SYNC gestartet. Diese Prozedur kann ein Aufruf an alle sein. Die SYNC-Prozedur löst bei allen beteiligten Busteilnehmern (auch beim Master) einen Interrupt aus. Für die Interrupt-Auslösung kann ein externer Sekundentakt, ein Empfangstakt, ein Uhrzeitsynchrontakt oder ein Primäruhr-Synchrontakt vorgesehen sein. Je nach dem für die Interruptauslösung bestimmten Takt ergeben sich verschiedene Verfahrensschritte. Nach der in Fig. 9 gezeigten, durch einen externen Sekundentakt bewirkten Synchronisierung schließt sich an den Interrupt-Schritt ein Unterprogramm 31 "Uhrzeit bearbeiten" an, nach dessen Ende in einem nachfolgenden Schritt 32 ein Flag gesetzt wird, das einen Synchrontakt als "Sekundentakt" gekennzeichnet. Danach wird die Soll-Feinzeit anhand des Sekundentakts berechnet. Anschließend wird die Differenz zwischen dem Zählerstand und dem Rest null gesetzt, woraus sich eine neue Feinzeit ergibt.

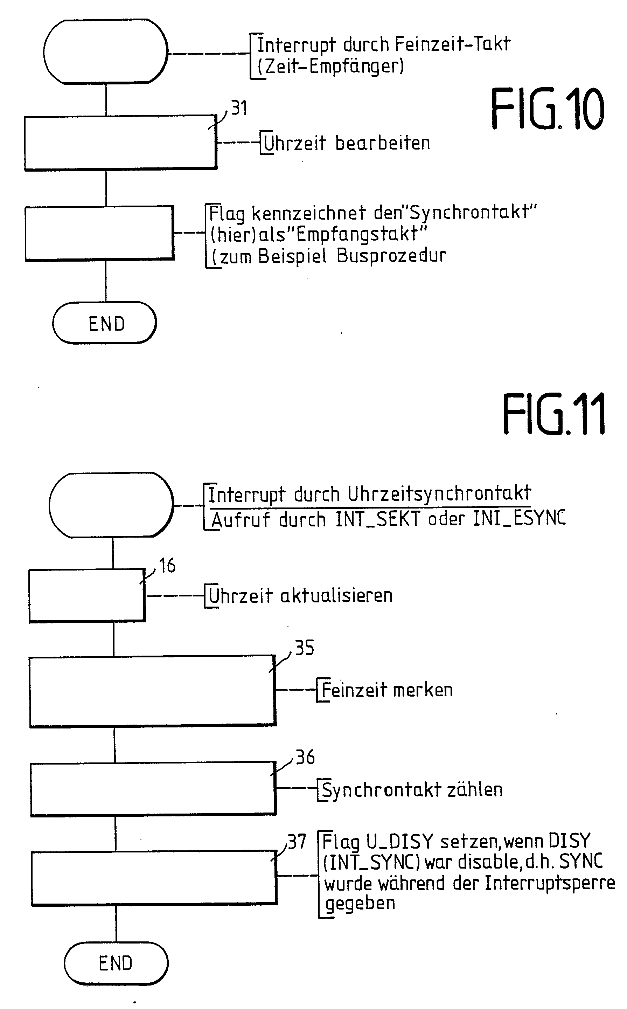

Bei einem Interrupt mit Hilfe eine Empfangstakt wird das in Fig. 10 dargestellte Verfahren durchlaufen. Es folgt auf den Interrupt Schritt wiederum das Unterprogramm 31, dem sich ein Schritt 35 anschließt, in dem ein Flag den Synchrontakt als Empfangstakt kennzeichnet. Das in Fig. 11 dargestellte Unterprogramm 31 enthält einen Interrupt-Schritt, der unmittelbar durch einen Uhrzeitsynchrontakt ausgelöst werden kann. An diesen Schnitt schließt sich das Unterprogramm 16, Uhrzeitaktualisieren an, auf das ein Unterprogramm 35 "Feinzeit merken" folgt. Danach wird in einem Schritt 36 der Synchrontakt gezählt. In einem Schritt 37 wird ein Flag gesetzt, wenn die Kennung SYNC während einer Interruptsperre erzeugt wurde.

Wenn ein Interrupt durch einen Primäruhr-Synchrontakt erzeugt wird, wie er z. B. von einem Empfänger eines Zeitsenders erzeugt wird, dann wird auf den Interrupt-Schnitt wiederum die Uhrzeit durch das Unterprogramm 16 aktualisiert. Danach folgt das Unterprogramm 36, nach dessen Ende ein Interrupt-Request durchgeführt wird, der sich auf eine Interruptsperre bezieht. Wen keine Interruptsperre beim Eintreten des SYNC-Ereignisses eintritt, wird der Interrupt zu einer Zieladresse zugeordnet, wonach die Feinzeit und die Grobzeit für die Ausgabe zur Verfügung stehen. Bei einer Interruptsperre wird die Uhrzeit erst nach der Interrupt-Freigabe eingefroren, bevor die weiteren oben erwähnten Schritte folgen.

In einer anschließenden Busprozedur sendet der Master dem oder den Slaves seine eingefrorenenn Feinzeiten zusammen mit der Grobzeit. Damit ist die Übertragung der Echtzeit beendet.

Jeder Slave wird vorzugsweise mindestens mehrmals pro Minute synchronisiert. Die Slaves berechnen aus der übertragenen Uhrzeit und ihrer eigenen eingefrorenen Zeit die Zeitdifferenz für die eigene Echtuhr und regeln ihre Uhren nach bzw. stellen sie neu ein. Wenn die Regelabweichung mehrmals nacheinander unzulässig groß war, wird eine Testprozedur zur Fehlersuche angeführt. Die Testprozedur muß nicht sofort durchgeführt werden, sondern kann unter Berücksichtigung der Programmlaufzeit optimal aufgerufen werden.

In der Initalisierungsphase werden alle Variablen mit definierten Werten besetzt. Die Echtzeitverteilung sorgt dafür, daß nach einer Hochlaufzeit alle Echtzeituhren synchron laufen. Alle Zustände werden durch Flags angezeigt.

## Ansprüche

1. Vorrichtung zum Betrieb von Echtzeituhren, die sich in Teilnehmern eines hierarchisch durch Bussysteme verbundenen Prozeßsteuersystems befinden,
**dadurch gekennzeichnet,**
daß die Echtzeit von einer Zentraluhr vorgegeben und über die vorhandenen Bussysteme an die einzelnen Teilnehmer weitergeleitet und synchronisiert wird.

2. Vorrichtung nach Anspruch 1,
**dadurch gekennzeichnet,**
daß jede an der Uhrzeitführung und Uhrzeitübertragung beteiligte Einheit einen freilaufenden oder programmierbaren Hardwaretimer aufweist, dessen Zählstand zur Uhrzeit in der gewünschten Form weiterverarbeitet wird.

3. Vorrichtung nach Anspruch 1 oder 2,
**dadurch gekennzeichnet,**
daß der Hardwaretimer lediglich ein freilaufender Dualteiler sein muß, der aus einer Taktquelle gespeist wird.

4. Vorrichtung nach einem oder mehreren der vorangehenden Ansprüche,
**dadurch gekennzeichnet,**
daß an die Taktfrequenzstabilität der Taktquelle für den Hardwaretimer nur geringe Ansprüche bezüglich der Langzeitstabilität gestellt werden müssen.

5. Vorrichtung nach einem oder mehreren der vorangehenden Ansprüche,
**dadurch gekennzeichnet,**
daß die Uhrzeit asynchron aus dem Zählstand des jeweiligen Hardwaretimers ermittelt und den Verarbeitungseinheiten in geeigneter Form bereitgestellt wird.

6. Vorrichtung nach einem oder mehreren der vorhergehenden Ansprüche,
**dadurch gekennzeichnet,**
daß bei Überläufen des jeweiligen Hardwaretimers (9, 10) die Uhrzeit berechnet oder ein Überläufzähler beaufschlagt wird, dessen Inhalt bei der Uhrzeitberechnung berücksichtigt wird.

7. Vorrichtung nach einem oder mehreren der vorhergehenden Ansprüche,
**dadurch gekennzeichnet,**
daß die Echtzeituhren (5, 6) über die vorhanden Schnittstellen der Teilnehmer (2, 3) synchronisiert werden, indem ein durch den jeweiligen Schnittstellenbaustein bei oder nach der Übertragung eines Zeichens zeitlich festgelegtes Ereignis als Basis für ein Korrekturverfahren verwendet wird, mit dem die Echtzeit im jeweiligen Teilnehmer in Übereinstimmung mit der Echtzeit in der Zentraluhr gebracht wird.

8. Vorrichtung nach einem oder mehreren der vorhergehenen Ansprüche,
**dadurch gekennzeichnet,**
daß in jedem Teilnehmer bei Auftreten des Ereignisses die jeweilige Uhrzeit festgehalten danach zu untergeordneten Einheiten übertragen, dort mit der ebenfalls bei Auftreten des entsprechenden Ereignisses festgehaltenen Uhrzeit verglichen und dort zur Korrektur der Ganggeschwindigkeit der Teilnehmeruhr verwendet wird.

# FIG.1

# FIG.2

```
        ┌─────────────┐
        │    START    │ ─ ─ ─ ─ ─ ─ ─ ─ ─ ─ [ Hauptprogramm
        └─────────────┘
               │
               ▼
        ┌─────────────────────────────┐  13
        │  Initialisierung            │ ─ ─ ─ [ Uhren initialisieren
        └─────────────────────────────┘
               │
               ▼
        ┌─────────────────────────────┐  14    ┌ Auch Behandlung der Uhren
        │  Hauptprogrammschleife      │ ─ ─ ─ ─│ (z.B. wenn BUS-Prozeduren
        └─────────────────────────────┘        └ bearbeitet werden).
               │
               ▼
              ╱ ╲           ┌ Noch Programmlaufzeit vorhanden?
         ◄── ╱ ? ╲ ─ ─ ─ ─ ─
           h ╲   ╱
              ╲ ╱
               │ j
               ▼
        ┌─────────────────────────────┐  15
        │  Uhr korrigieren            │
        └─────────────────────────────┘
               │
               ▼
              ╱ ╲           ┌ Noch Zeit?
         ◄── ╱ ? ╲ ─ ─ ─ ─ ─
           h ╲   ╱
              ╲ ╱
               │ j
               ▼
        ┌─────────────────────────────┐  16
        │  Uhr aktualisieren          │
        └─────────────────────────────┘
```

# FIG.3

Uhrzeit aktualisieren

17 — Interrupt disable

18 — Hardware-Timer lesen

19 — Uhrzeit neu berechnen (nachführen)

20 — Interrupt enable

END

# FIG.5

Timer-Input-Operation

Hardware-Timer-Kopie TMO erstellen

nur, wenn die einzelnen Zählerworte synchron gelesen werden müssen 1. Zählwort ernennt (temporär) speichern

TEMP < TMO_0? Überlauf des ersten Timer-Wortes?

? 
j   h

END

F 88 / 8

# FIG.4

Hardware-Timer lesen

Interrupt disable

21 — Timer Input Operation

(Timer-Überlauf seit letztem IN TIME)?

? 

h

j

22 — die Bits $\geq 2^N$ von TMO werden durch IN_TMHW beeinflußt, da sie im Hardware-Timer nicht vorkommen ($2^N$ entspricht Timer-Überlauf)

Interrupt enable

END

F 88/8

FIG.6

Software-Uhr-Takt(aktualisieren)

23 — Generiere Millisekunden

ENDN — keine MS
ENDJ — neue MS

24 — Millisekunden-Takt-bearbeiten

ENDN — keine Min.
ENDJ — neue Min.

25 — Minutentakt bearbeiten

ENDN — keine Std.
ENDJ — neue Std.

26 — Stundentakt bearbeiten

ENDN — kein Tag
ENDJ — neuer Tag

27 — Tagestakt bearbeiten

ENDN — kein Mon.
ENDJ — neuer Mon.

28 — Monatstakt bearbeiten

ENDN — kein Jahr
ENDJ — neues Jahr

29 — Jahrestakt bearbeiten

30 (13) — Teste Uhrzustand

END

F 88/8

# FIG.7

Generiere Millisekunden-Takte

Millisekunden-Takte:=0

(HW Timer um 1Millisekunden weiter)?

?

h

j

HW-Timer-Nachführung um eine
Millisekunde erhöhen

eine Millisekunde für SW-Uhr
registrieren

Timer-Rest auf SW-Uhr
berechnen

(Millisekundentakt(e)?)

?

j

h

ENDN

ENDJ

( kein Millisekundentakt)

(Millisekundentakte)

F 88/8

FIG.8

| | |
|---|---|
| | Millisekundentakt(e) |
| | Stoppuhren |
| | Uhr:Millisekundentakte aktualisieren |
| | Versuch,60 Sekunden zu subtrahieren |

? —— negativ ——→ ENDN —— kein Minutentakt

j / h

Schaltsekunde-Anforderung?

h / j

U_MIN=59 (59.Minute)?

h / j

SZ(Sommerzeit)? ——→ ? —— U_STD=1

j / h          h / j

U_STD=0

?

h / j

Schaltsekunde subtrahieren

? —— TEMP negativ? ——→ ENDN —— Schaltsekunde läuft noch

h / j

Schaltsekunde beendet quittieren

Millisekunden nach Minutentakt

ENDJ —— Minutentakt

F 88/8

# FIG.9

Interrupt durch externen Sekundentakt
(Uhrzeit-Synchrontakt

31
Uhrzeit bearbeiten

32
Flag kennzeichnet den"Synchrontakt"
als Sekundentakt

33
Soll-Feinzeit
berechnen

34
Timer-Rest:=0

Flag meldet neue Feinzeit

END

**FIG.10**

Interrupt durch Feinzeit-Takt
(Zeit-Empfänger)

Uhrzeit bearbeiten — 31

Flag kennzeichnet den"Synchrontakt"
(hier)als"Empfangstakt"
(zum Beispiel Busprozedur

END

**FIG.11**

Interrupt durch Uhrzeitsynchrontakt
Aufruf durch INT_SEKT oder INI_ESYNC

Uhrzeit aktualisieren — 16

Feinzeit merken — 35

Synchrontakt zählen — 36

Flag U_DISY setzen,wenn DISY
(INT_SYNC)war disable,d.h. SYNC
wurde während der Interruptsperre
gegeben — 37

END

F 88/8

# FIG.12

Interrupt durch Primäruhr-Synchrontakt
(Zeitsender)

16

Uhrzeit aktualisieren

36

Feinzeit merken

DISY = 1 (Interrupt-Request während
Interrupt-Disable)?

?

j

h

Keine Interruptsperre

Feinzeit bei
Interruptsperre

mögliche Zuordnung des Interrupts
zu einer Zieladresse

Feinzeit + Grobzeit für
Ausgabe vorhanden

END

F 88 / 8